# EUROPEAN PATENT SPECIFICATION

(11) **EP 3 514 902 B1**
(45) Date of publication and mention of the grant of the patent: **25.11.2020**
(21) Application number: 19152917.1
(22) Date of filing: 21.01.2019
(51) Int. Cl.: H02G 3/06, H02G 3/08, H02G 3/12, H02G 3/14, H02G 3/32

(54) **JUNCTION BOX**
ANSCHLUSSDOSE
BOÎTIER DE RACCORDEMENT

(30) Priority: 19.01.2018 IT 201800001528
(43) Date of publication of application: 24.07.2019
(73) Proprietor: Vimar S.p.A., 36063 Marostica (VI) (IT)
(72) Inventor: DECATALDO, Cosimo, 36060 Pianezze (VI) (IT); MOCELLIN, Dario, 36061 Bassa del Grappa (VI) (IT)
(74) Representative: Locas, Davide

(56) References cited:
- EP-A1- 2 736 138
- EP-A1- 3 059 821
- US-A- 5 221 814

## Description

The present invention relates to a wall-installable junction box for electrical installations, in particular plasterboard walls.

In the field of civil and industrial electrical installations, it is known to use suitable box housings, commonly known as junction boxes, which are fixable to the walls, within which the electrical cables of the installation are received so as to provide the appropriate connections and junctions.

Typically, the junction boxes are fixed to the wall and comprise a removable cover to allow access to the interior thereof so as to feed the electrical cables into the relevant corrugated tubes and provide the relevant electrical connections.

Examples of junction boxes are described in European patent application EP 1 953 887, EP 2 736 138 or Italian patent application MI2009A000558.

However, these known solutions therefore have drawbacks in terms of practicality of installation and precision of laying.

In particular, in the case of installation on plasterboard walls, where the fixing generally takes place using through screws on the surface of the wall which are engaged with a flange of the box, it would be desirable to have alternative fixing solutions available which do not necessarily require the use of screws which perforate the wall.

Other solutions, used in different electrical components such as a mounting box or a face plate, are also disclosed in EP 3059821 or US 5 221 814, respectively. Nevertheless, also in these known solution do not provide for the flexibility of installation that would be desirable in the junction boxes mentioned above.

The technical problem behind the present invention therefore involves making available a junction box which is structurally and functionally designed to overcome one or more of the drawbacks described in relation to the cited prior art.

Within the background of this problem, a primary object of the present invention is to make available a junction box which is simple and practical to install.

It is also an object of the present invention to provide a junction box which offers various alternative solutions for fixing to the wall, in particular in the case of plasterboard walls.

A further object of the present invention is to provide a junction box which can be fixed frontally, in other words from the front side of the wall.

This problem is solved and these objects are achieved by the invention by way of a junction box according to claim 1.

The junction box according to the present invention may advantageously be mounted frontally on the wall. In particular, by removing the flanges, if present, it is possible to pass the box through the associated hole in the wall, which will have dimensions such as to let it pass through until it contacts the contact support. By screwing in the threaded pin, the locking element is displaced into the projecting position, in which, by continuing the screwing action, it can hold the wall between the contact support and the locking element itself.

Preferably, the guide surface comprises a portion which is transverse with respect to the axis of the through hole and a portion which is parallel with respect to the axis of the through hole. In this way, in a first step of the screwing the locking element is displaced from the first position to the second position, and in a second step it is kept in the second position approaching the contact support.

In one embodiment, the parallel portion is defined by an elongate slot which defines a guide.

In a preferred embodiment, the locking element comprises a screwing portion, provided with a threaded hole, and a locking portion, the screwing portion and the locking portion having a greater extent than the elongate slot and being separated by a narrowing designed so as to slide inside said elongate slot defining the guide when the locking element is screwed onto the threaded pin. Preferably, the transverse portion forms an angle greater than 90° with the portion parallel to the axis of the through hole.

These features make it possible to implement the above-described movement action in a manner which is simple and easy to achieve by moulding. Preferably, the threaded pin has a throat at an end thereof, in which a resilient element is housed.

In a further aspect, the junction box further comprises a handle removably connected to the base structure and a first and second attachment element of the handle, the first and the second attachment element being designed so as to hold the handle removably at a central portion of the base structure or at a peripheral portion thereof respectively.

The handle can thus easily be used, if required, to grip the box during the installation thereof, making it possible to keep it in the appropriate position using only one hand. At the same time, the presence of two different attachment means makes it possible to keep the handle in an unobtrusive position if it is not required for the installation and to remove it in any case at the end of fixing the box.

In a preferred embodiment, the first attachment means are located at the perimeter wall and the second attachment means are located at the rear wall, preferably on the side facing the exterior of the housing volume. Preferably, the second attachment means are located at a central region of the rear wall. These positions are found to be particularly advantageous for achieving effective mounting and for not obstructing the operations of inserting and wiring cables if the handle is not used.

In one embodiment, the first attachment means comprise a joining device suitable for making removable connection of the handle possible.

Preferably, the joining device comprises a recess formed on the rear wall and an engagement tooth formed on the handle. In a preferred embodiment, the joining device comprises a pair of recesses and associated engagement teeth, formed at opposite ends of the handle. This embodiment makes it possible to achieve removable coupling using a simple, economical solution which is easily achievable by moulding plastics material.

Preferably, the handle is resiliently deformable and is shaped in such a way that, when it is connected to the second attachment element, the opposite ends are spaced apart from one another as a result of a force in the direction of the rear wall. In this way, the operation of attaching and removing the handle can be carried out in an extremely simple manner while still working with only one hand.

In one embodiment, the handle has a C shape. Preferably, the engagement teeth are formed on the ends of the C towards the inside.

In a further aspect, the second attachment means comprise a intended frangible portion or predetermined breaking portion. Preferably, the intended frangible portion is formed at the perimeter wall, preferably on the side facing the exterior of the housing volume. In this aspect, the position defined by the first attachment means corresponds to that taken on by the handle at the end of moulding the junction box. In this way, the handle is normally positioned so as not to obstruct the installation of the box when the handle is not required. At the same time, it may be positioned in use by simply breaking the relevant portion.

In one embodiment, the base structure comprises at least one fixing flange which projects, on the perimeter, towards the exterior of the base structure from the perimeter walls, the flange being able to receive screws for fixing the box to the wall. Preferably, the fixing flange has a plurality of through holes which can receive a screw in different positions so as to make simple fixing on a plasterboard wall possible.

In a further aspect, the perimeter edge comprises a shoulder provided with a plurality of through openings.

In this aspect, ties, or another analogous element which passes through the openings, may be used for locking the corrugated tube, making the installation simple and simultaneously precise in the case of plasterboard walls.

In a preferred embodiment, the shoulder extends from said perimeter edge towards the interior of the base structure. The position of the openings is thus such as to make them easily available when the box is fixed to a wall and once the removable portion of the lateral wall has been removed.

Preferably, the perimeter edge comprises a sheet abutment element, to which the removable portions are removably fixed on which the corrugated tube can advantageously be engaged, further facilitating locking said tube.

In a preferred embodiment, the removable portions are connected to the rear wall and to the perimeter edge at associated intended frangible portions. Preferably, the openings have the shape of an elongate slot and extend in a direction perpendicular to the longitudinal extension of the perimeter edge.

In these aspects, the openings face one another directly in the region in which, after the removal of the removable portions of the perimeter wall, the corrugated tubes are inserted into the housing volume of the box.

In one embodiment, there are two openings for each removable portion, making it possible to wrap the tie around the corrugated tube, passing through the two openings.

In a further aspect, the perimeter edge comprises a pair of scored points which can be perforated so as to define associated through holes.

In this aspect, the box may also be fixed to the flank, in particular in the case of mounting on a plasterboard wall, by perforating the scored points using screws and fixing it to an upright of the wall.

The removable portions are connected to the perimeter edge at two intended frangible portions, each lightened point being formed between the intended frangible portions. Each through hole preferably has an axis perpendicular to a corresponding portion of the perimeter wall. In one embodiment, the perforable scored points are formed at the shoulder which is provided with a plurality of through openings, the through openings being perpendicular to the through holes which can be defined by the perforable scored points.

These solutions make it possible to provide an optimal compromise between robustness of the structure and ease of mounting.

The features and further advantages of the invention will be more clearly apparent from the following detailed description of a preferred but non-exclusive embodiment, which is explained in an illustrative, non-limiting manner with reference to the accompanying drawings, in which:
- Fig. 1 is a perspective view of the junction box of the present invention with a handle located in a first, construction position;
- Fig. 2 is a perspective view of the junction box of the present invention with the handle located in a second, operating position;
- Fig. 3 is a perspective view of the junction box of Fig. 2 during the wall-mounting
- Fig. 4 is a perspective view of the junction box in accordance with further aspects of the present invention;
- Fig. 5 is a detailed front view of the junction box of Fig. 4 during the fixing of a corrugated tube;
- Fig. 6 is a perspective view of a detail of Fig. 5;
- Fig. 6A is a schematic perspective cross-sectional view of the junction box of Fig. 4 during the fixing of a corrugated tube;
- Fig. 7 is a perspective view of the junction box in accordance with further aspects of the present invention;
- Fig. 8 is a perspective view of the junction box of Fig. 7 during fixing to an upright of a plasterboard wall;
- Fig. 9 is a perspective partially exploded view of the junction box in accordance with further aspects of the present invention;
- Fig. 10 to 13 illustrate different steps of frontal installation of the junction box of Fig. 9 in a plasterboard wall, by way of respective perspective views;
- Fig. 14 is a perspective view of the junction box in accordance with further aspects of the present invention.

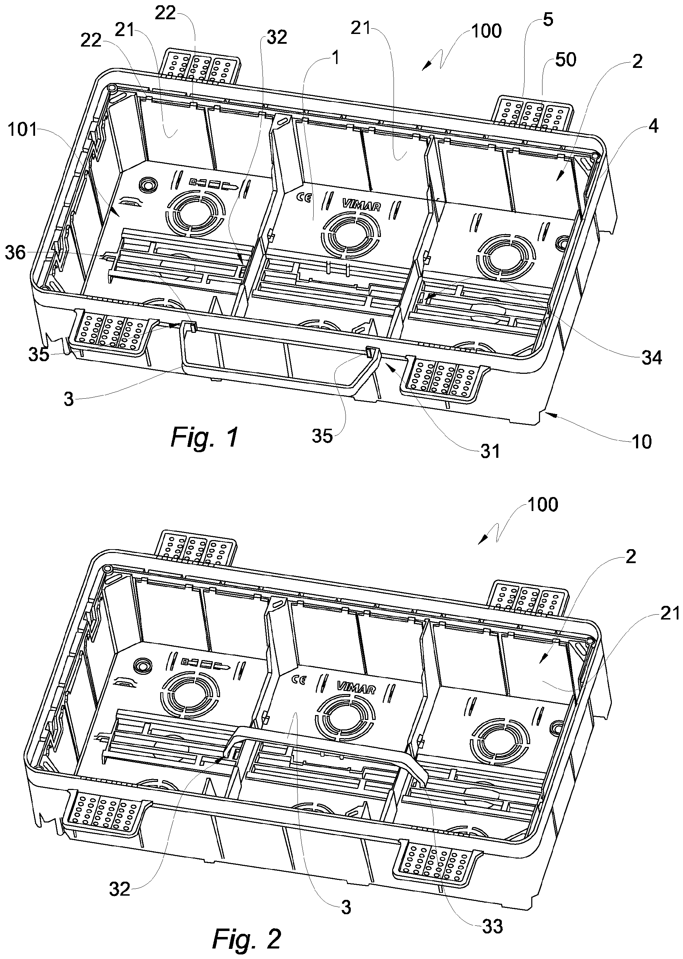

Referring initially to Fig. 1, a junction box according to the present invention is denoted as a whole by reference numeral 100.

The junction box 100 has a housing volume 101 into which the electrical cables are inserted to carry out the wiring of the electrical installation and within which the relevant connections between different ends of the electrical cables are provided.

The housing volume 101 is defined as a whole by a base structure 10, which preferably comprises a rear wall 1 and perimeter walls 2.

In a preferred embodiment, the base structure has a substantially parallelepiped shape, having a larger face which is open and is closable using an associated cover, not shown in the drawing.

The cover may be fixed to the base structure 10 in a manner known per se, namely using screws which engage on associated internal threads formed on the base structure.

In a preferred embodiment, the junction box is fixed to the wall using suitable fixing flanges 5, which project, on the perimeter, from the perimeter walls 2 towards the exterior of the base structure 10.

Preferably, the fixing flanges 5 have a plurality of through holes 50 which can receive a screw in different positions, locking the box in the appropriate position on the plasterboard wall.

Naturally, different methods of fixing may also be provided, in particular if the junction box is intended for different types of wall.

In a first aspect of the invention, the junction box 100 further comprises a handle 3 which can be fixed removably to the base structure 10 using first and second attachment means 31, 32.

The two attachment means are positioned so as to fix the handle in two different positions, also indicated as the construction position and operating position. Specifically, referring initially to Fig. 1, the first attachment means 31 are designed so as to hold the handle 3 removably at a peripheral portion of the base structure 10.

In this first position, the handle 3 does not interfere with the operation of mounting the box or in any case does not occupy the housing volume 101. Preferably, this positioning is achieved by providing the first attachment means 31 at the perimeter wall 2.

For the purpose of making the handle available only when required, but at the same time making it a component which is always available to the installer, in a preferred embodiment the first attachment means 31 are defined by a intended frangible portion 36, also known as a predetermined breaking region, which can be broken to separate the handle from the base structure when required. The predetermined breaking region may for example be implemented by way of a lightened point or a partial notch formed in the portion joining the handle 3 to the associated peripheral portion of the base structure 10. Preferably, the intended frangible portion is formed at the perimeter wall 2, on the side facing towards the exterior of the housing volume 101.

Advantageously, the intended frangible portion 36 can be obtained directly during the actual moulding of the junction box of the present invention, and for this reason the first position of the handle 3 is also known as a construction position.

However, as is shown in Fig. 2, in the other, operating position, the handle 3 is arranged in a central portion of the base structure. For this purpose, in a preferred embodiment, the second attachment means 32 are located at the rear wall 1 of the base structure, preferably on the side facing the exterior of the housing volume 101.

As explained above, the present invention makes it possible to make the handle 3 available only when required, and, for this same purpose, the attachment of the handle to the second attachment means may advantageously be achieved using a joining device 33 suitable for making possible a removable connection of the handle 3.

It should thus be noted that, in this position, the operator can easily hold the box using one hand, by gripping the handle, while keeping the other hand free to use a screwdriver and to fix the box to the wall. This second position is thus also known as an operating position.

As is shown in Fig. 2, in one embodiment the joining device 33 comprises a pair of recesses 34 and respective engagement teeth 35, formed at opposite ends of the handle 3.

Preferably, the handle 3 is resiliently deformable and is designed in such a way that, when it is connected to the second attachment means 32, the opposite ends are spaced apart from one another as a result of a force in the direction of the rear wall 1, making it possible to insert and withdraw the engagement teeth 35 into and out of the associated recesses 34.

For the purpose of making it more easily deformable as set out above, the handle 3 may have a C shape. In this case, the engagement teeth 35 may be formed on the ends of the C towards the interior, in such a way that, when the handle 3 is locked on the recesses, a pressure thereof towards the rear wall causes the teeth 35 to be spaced apart from one another, causing them to exit the associated recesses. Further, this design also makes it possible to provide that a movement of the handle away from the wall urges the teeth 35 towards the interior of the recesses 34, making the connection of the handle more stable.

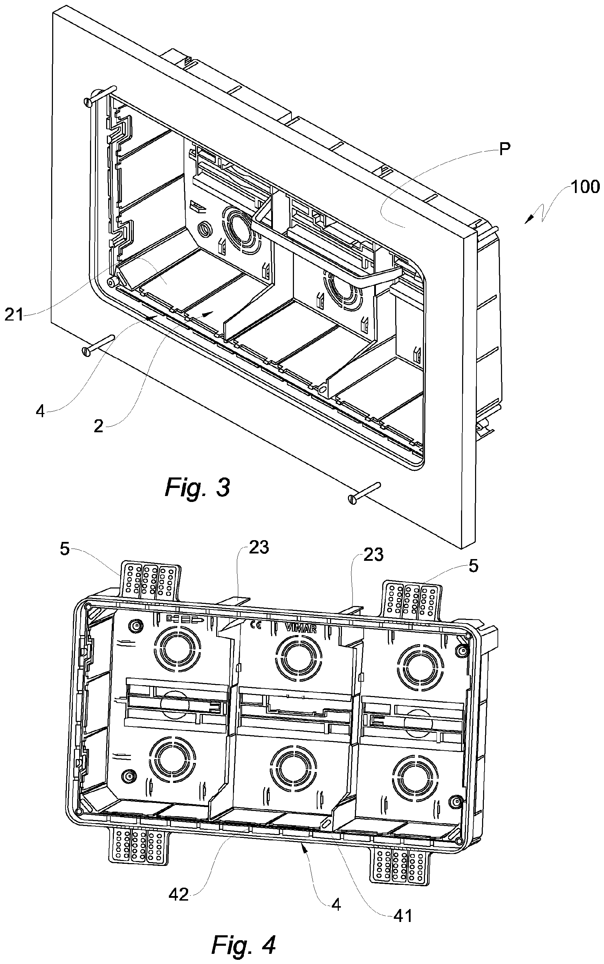

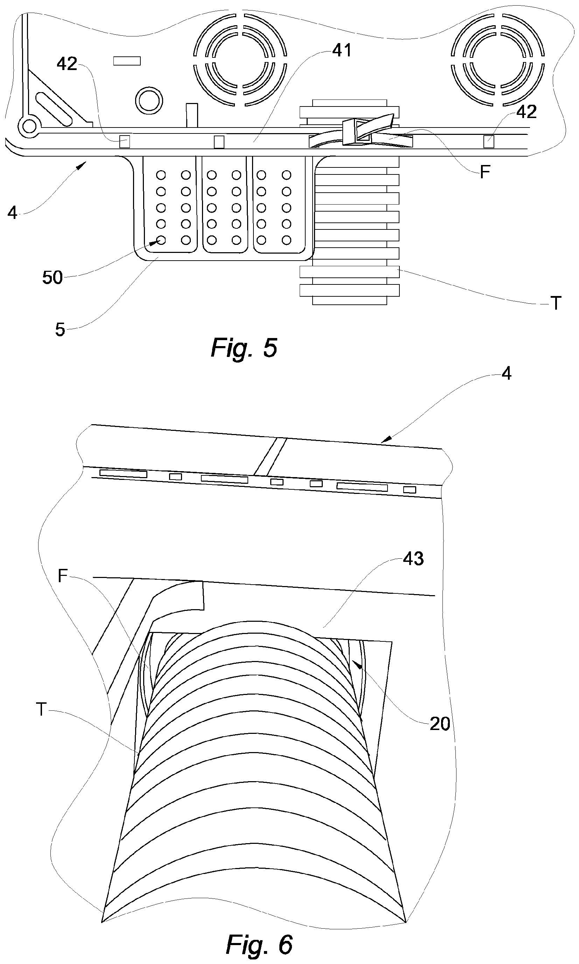

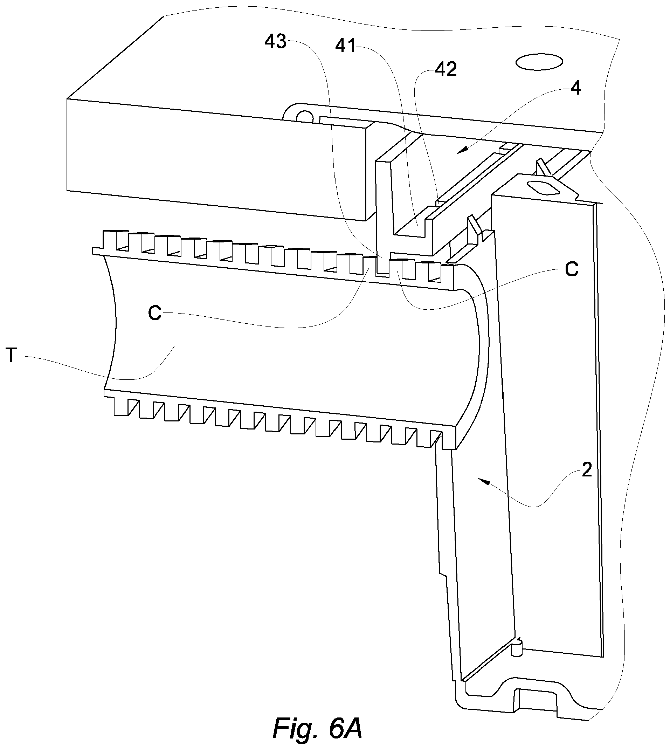

Referring now to Fig. 4 to 6, in a further aspect of the invention, the corrugated tube T of the civil installation is partially inserted into the junction box 100 by removing one or more removable portions 21 which are part of the perimeter walls 2. Indeed, removing one of the removable portions 21 makes it possible to have a corresponding passage 20 defined, which is partially visible in Fig. 6 and is designed so as to make it possible for the corrugated tube T to enter the housing volume of the junction box 100. It should be noted that in Fig. 6A the corrugated tube T is shown passing through the removable portion 21, and thus for greater descriptive clarity the passage 20 is not visible in this drawing. In a preferred embodiment, the removable portions 21 are connected to the rear wall 1 and the perimeter edge 4 at associated intended frangible portions 22.

In one embodiment, the perimeter edge 4 defines an entry mouth of the housing volume. In this way, the perimeter edge 4 can in any case guarantee sufficient structural robustness, as well as defining a contact for the cover, even if one or more removable portions 21 are removed.

To make stable locking of the tube T possible, the perimeter edge 4 comprises a shoulder 41 provided with a plurality of through openings 42, on which a tie F or other analogous locking element can be passed to hold the tube.

In a preferred embodiment, the shoulder 41 extends from said perimeter edge 4 towards the interior of the base structure 10.

Preferably, the perimeter edge 4 comprises a sheet abutment element 43. In one embodiment, the sheet element 43 is fixed to the edge 4 at one external end thereof, opposite the shoulder 41 at the end to which the removable portions 21 are removably fixed.

The sheet abutment element 43 may be inserted between two consecutive widenings or crests C of the corrugated tube so as to prevent the corrugated tube from slipping out from the opening defined as a result of the removal of the removable portion 21.

In a preferred embodiment, to facilitate the insertion of the tie F, the openings 42 have the shape of an elongate slot and extend in a direction perpendicular to the longitudinal extension of the perimeter edge 2.

Preferably, two openings 42 are present for each removable portion 21, in such a way that it is possible to insert the tie into a first opening, wrap it around the tube, and insert it into the other opening, thus clasping the corrugated tube T. It should be noted that this configuration also makes it possible to hold the tube against the sheet 43 as explained above.

In addition or as an alternative to the above-described system for fixing the corrugated tubes, in another aspect of the invention, it is possible to provide the use of an auxiliary support element for the corrugated tubes, not shown in the drawings, which can be bonded to the junction box of the present invention using guides 23 formed at the perimeter wall 2, on the external side thereof.

In a preferred embodiment, the auxiliary support element may be formed by a base surface, which is configured so as to be inserted between the aforementioned guides 23 and from which a plurality of sleeves extend which can receive the corrugated tubes so as to hold them.

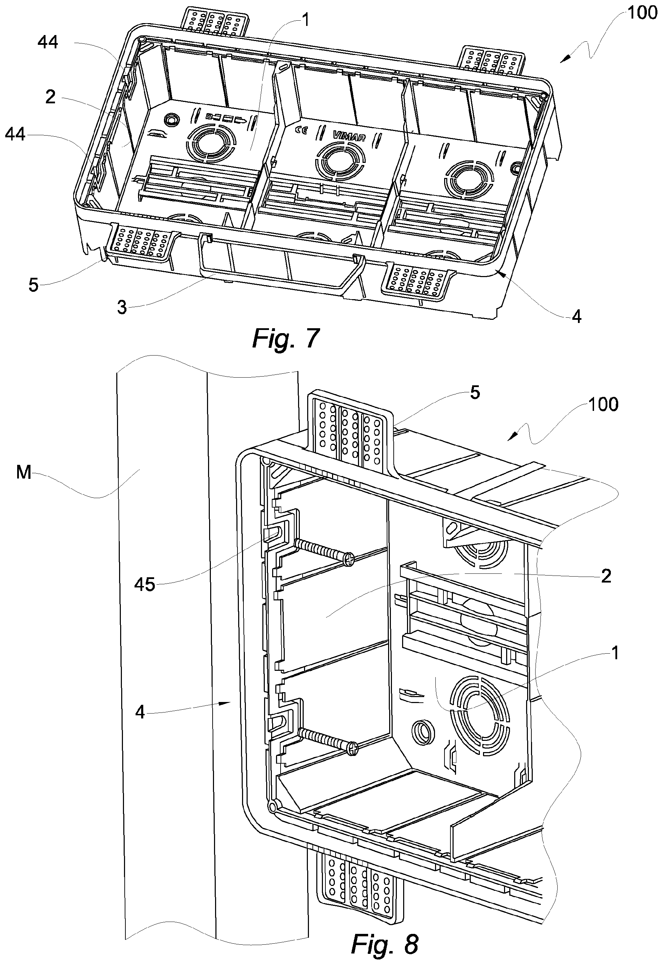

Referring now to Fig. 7 and 8, in yet another aspect, the junction box 100 may also be fixed to the uprights M of the plasterboard wall P. For this purpose, the perimeter edge 4 may comprise a pair of perforable scored points 44 which can be perforated to define respective through holes 45. Each through hole 45 has an axis perpendicular to the corresponding portion of the perimeter wall 2, thus in other words facing the upright M when the lateral mounting is to be carried out.

During the installation, by acting for example with a screwdriver on the scored points or screwing in a screw directly, the lightened point can be removed or perforated, making possible the fixing to the upright M using a screw.

In a preferred embodiment, each lightened point 44 is positioned between two intended frangible portions 22 of the removable portions 21.

Preferably, the perforable scored points 44 are formed at the shoulder 41 which is provided with a plurality of through openings 42, the through openings being perpendicular to the through holes 45 which can be defined by the perforable scored points 44.

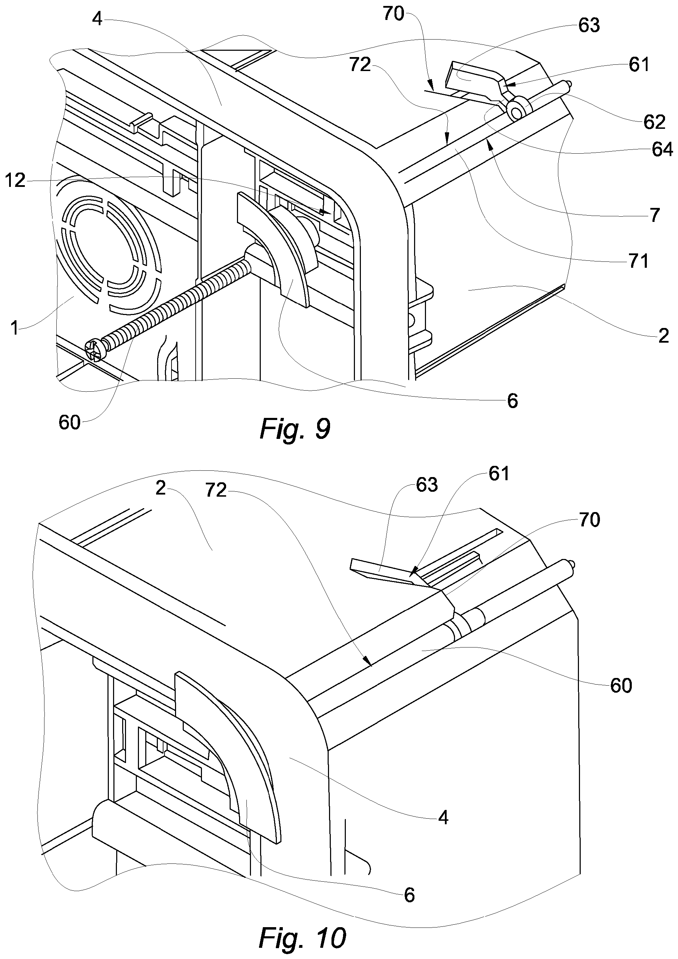

Referring now to Fig. 9 to 13, in another further aspect, the junction box of the present invention advantageously makes possible installation from the wall side, or frontal installation.

For this purpose, the flanges 5 may be removed, preferably by acting on respective intended frangible regions, for example defined by punch-outs or scores formed at the region thereof for bonding to the perimeter edge 4. It should be noted that, once the flanges 5 are removed, it is possible to insert the junction box frontally into the associated hole on the wall.

In this embodiment, the junction box further comprises, preferably as additional accessories, a contact support 6, a screw or a threaded pin 60 and an elongate locking element 61 which can be screwed onto the threaded pin 60.

The base structure 10 is provided with a through hole 12 in which the threaded pin 60 can be housed, which can thus bond the contact support 6 and the locking element 61 on opposite sides of the hole 12.

In one embodiment, the threaded pin 60 has an end with a throat, not shown in the drawings, where it is possible to house a resilient element, such as a Seeger ring or a resilient washer to prevent the locking element 61 from slipping out when it is fully unscrewed.

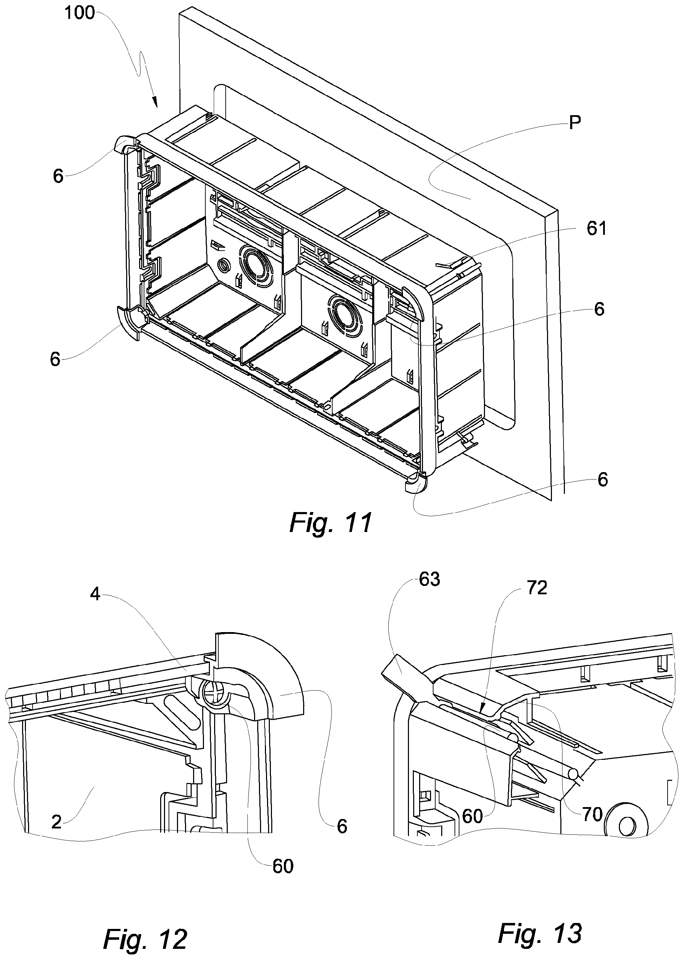

The contact support 6 is designed such that it can rest against corners of the perimeter edge 4 such that an associated extension projections towards the exterior from the edge itself. Preferably, this extension is in the form of a circular sector. Thus, when the box is inserted into the opening formed in the wall P for installation thereof, the extension contacts the wall, resting thereon. In preferred embodiments, the contact support 6 has a slot, visible in Fig. 12, within which a portion of the perimeter edge 4 can be housed. For this purpose, the slot may have a shape complementary to this edge portion, so as to achieve sufficiently stable and precise coupling, simplifying the installation steps.

It will further be appreciated that the contact support 6 is formed as a removable element, in other words can be separated from the base structure 10 when not being used. In this way, it can advantageously be removed when the installation of the box 100 from the back of the wall is provided, the flanges 5 thus being used for the relevant fixing. The presence of the contact support 6 would actually impede locating the edge 4 flush with the opening formed in the wall, making correct installation of the box impossible in this case.

The locking element is further movable between two different operating configurations.

In a first configuration, the locking element 61 is in a position close to the perimeter wall 2, making it possible to remain substantially within the perimeter outline defined by the edge 4 and thus to allow insertion into the opening of the wall O. This configuration is shown for example in Fig. 10.

In the second configuration, however, the element 61 is in a position projecting towards the exterior of the perimeter wall 2 and prevents passage through the aforementioned opening, as shown in Fig. 13.

To achieve passage between the first and the second position, the base structure 10 comprises a guide surface 7, preferably defined on the perimeter wall 2 and designed in such a way that, during the screwing of the elongate locking element 61 on the threaded pin 60, the elongate locking element 61 slides across the guide surface 7, moving from the position close to the perimeter wall 2 to the position projecting towards the exterior of the perimeter wall 2.

Preferably, this effect is achieved by providing, in the guide surface 7, a transverse portion 70, which is thus arranged transversely with respect to the axis of the through hole, and a parallel portion 71, which is meanwhile arranged parallel to the axis of the through hole.

In one embodiment, the parallel portion 71 is defined by an elongate slot 72.

In a preferred embodiment, to achieve suitable coupling with the aforementioned portions and in particular with the slot 72, the locking element 61 comprises a screwing portion 62, provided with a threaded hole, and a locking portion 63, preferably curved.

The screwing portion and the locking portion have a greater extent than the elongate slot 72, and are separated by a narrowing 64 which can thus slide inside said elongate slot 72 when the locking element is screwed onto the threaded pin.

Likewise for guiding the locking element 61 in a suitable manner, in a preferred embodiment, the transverse portion 70 forms an angle greater than 90° with the portion parallel to the axis of the through hole 12.

When the pin is screwed in, for example by acting on the externally accessible head using a screwdriver, the locking element 61 tends to approach the contact support 6. In a first step, the locking element 61 will tend to slide on the transverse portion, also rotating until it reaches the extended position.

However, having reached the slot, the element 61 will continue the movement thereof approaching the support 6 by sliding linearly, and thus without further rotations.

In this way, by urging the element 61 towards the support 6, it will be possible to close the wall between the locking element 61 and the support 6, locking the box in position.

The invention thus solves the set problem, while simultaneously leading to a plurality of advantages. In particular, the junction box according to the present invention makes simple installation possible, and can easily be adapted to the various requirements of the operator. In addition, the presence of the shoulder provided with a plurality of through openings makes it possible to hold the corrugated tubes at the box in a simple manner, in particular in the case of plasterboard walls where the tubes are not locked using mortar or other cement mixtures.

## Claims

1. Junction box (100) comprising a base structure (10) that defines a housing volume (101) for electrical cables and other components, said base structure comprising a rear wall (1), perimeter walls (2) and a perimeter edge (4) connected to said perimeter walls (2), and further comprising a through hole (12) defined on the perimeter edge (4), a contact support (6), a threaded pin (60) housed in the through hole (12), an elongate locking element (61) which can be screwed onto the threaded pin (60), and the perimeter wall (2) comprising a guide surface (7) designed such that, while the elongate locking element (61) is being screwed onto the threaded pin (60), the elongate locking element (61) slides across the guide surface (7), moving from a position close to the perimeter wall (2) to a position projecting towards the exterior of the perimeter wall (2), the threaded pin (60) binding the contact support (6) and the locking element (61) on opposite sides of the through hole (12), **characterised in that** it comprises removable fixing flanges (5) which project, on the perimeter, from the perimeter walls (2) towards the exterior of the base structure (10), and **in that** said contact support (6) is likewise removable and is designed such that it can rest against the corners of the perimeter edge (4) such that an associated extension projects towards the exterior from the perimeter edge (4).

2. Junction box (100) according to claim 1, wherein said flanges (5) each comprise intended frangible regions formed in the region thereof connecting to the perimeter edge (4).

3. Junction box (100) according to either of the preceding claims, wherein said threaded pin (60) has a groove on one of the ends thereof for housing a resilient element.

4. Junction box (100) according to any one of the preceding claims, wherein said lateral walls (2) and/or said perimeter edge (4) are rectangular and each comprise a respective through hole (12), contact support (6), threaded pin (60), elongate locking element (61) and guide surface (7) at each corner defined by said rectangular shape.

5. Junction box (100) according to any one of the preceding claims, wherein said extension of said contact support (6) that projects towards the exterior from the perimeter edge (4) is shaped as a circular sector.

6. Junction box (100) according to any one of the preceding claims, wherein the guide surface (7) comprises a portion (70) which is transverse with respect to the axis of the through hole and a portion (71) which is parallel with respect to the axis of the through hole.

7. Junction box (100) according to claim 7, wherein the parallel portion (71) is defined by an elongate slot (72).

8. Junction box (100) according to claim 8, wherein the locking element (61) comprises a screwing portion (62), provided with a threaded hole, and a locking portion (63), the screwing portion and the locking portion having a greater extent than the elongate slot (72) and being separated by a narrowing (64) designed so as to slide inside said elongate slot (72) when the locking element is screwed onto said threaded pin.

9. Junction box (100) according to any one of the preceding claims, wherein the transverse portion (70) forms an angle greater than 90° with the portion parallel to the axis of the through hole (12).

## Patentansprüche

1. Anschlusskasten (100), umfassend eine Basisstruktur (10), die ein Gehäusevolumen (101) für elektrische Kabel und weitere Komponenten definiert, wobei die Basisstruktur eine Rückwand (19), Umfangswände (2) und eine mit den Umfangswänden (2) verbunden Umfangsrand (4) umfasst, und ferner eine Durchgangsöffnung (12), die am Umfangsrand (4) definiert ist, einen Kontaktträger (6), einen Gewindestift (60), der in der Durchgangsöffnung (12) untergebracht ist, ein längliches Verriegelungselement (61) umfasst, das auf den Gewindestift (60) schraubbar ist, und die Umfangswand (2) eine Führungsfläche (7) umfasst, die so ausgelegt ist, dass sich beim Schrauben des länglichen Verriegelungselements (61) auf den Gewindestift (60) das längliche Verriegelungselement (61) über die Führungsfläche (7) verschiebt, und sich von einer Position in der Nähe der Umfangswand (2) zu einer Position bewegt, die in Richtung der Außenseite der Umfangswand (2) vorragt, wobei der Gewindestift (60) den Kontaktträger (6) und das Verriegelungselement (61) auf gegenüberliegenden Seiten der Durchgangsöffnung (12) verbindet,
**dadurch gekennzeichnet, dass** dieser abnehmbaren Befestigungsflansche (5) umfasst, die am Umfang von den Umfangswänden (2) in Richtung der Außenseite der Basisstruktur (10) vorragen, und dass der Kontaktträger (6) ebenfalls abnehmbar ist und so ausgelegt ist, dass dieser an den Ecken des Umfangsrands (4) anliegen kann, sodass eine zugehörige Verlängerung vom Umfangsrand (4) in Richtung der Außenseite vorragt.

2. Anschlusskasten (100) nach Anspruch 1, wobei die Flansche (5) jeweils beabsichtigte zerbrechliche Bereiche umfassen, die in dem Bereich ausgebildet sind, der mit dem Umfangsrand (4) verbunden ist.

3. Anschlusskasten (100) nach einem der vorhergehenden Ansprüche, wobei der Gewindestift (60) an einem seiner Enden eine Nut zum Aufnehmen eines elastischen Elements umfasst.

4. Anschlusskasten (100) nach einem der vorhergehenden Ansprüche, wobei die Seitenwände (2) und/oder der Umfangsrand (4) rechteckig sind und jeweils eine entsprechende Durchgangsöffnung (12), einen Kontaktträger (6), einen Gewindestift (60), ein längliches Verriegelungselement (61) und eine Führungsfläche (7) an jeder durch die rechteckige Form definierten Ecke aufweisen.

5. Anschlusskasten (100) nach einem der vorhergehenden Ansprüche, wobei die Verlängerung des Kontaktträgers (6), die vom Umfangsrand (4) nach außen vorragt, als kreisförmiger Sektor geformt ist.

6. Anschlusskasten (100) nach einem der vorhergehenden Ansprüche, wobei die Führungsfläche (7) einen Abschnitt (70), der in Bezug auf die Achse der Durchgangsöffnung quer verläuft, und einen Abschnitt (71) umfasst, der in Bezug auf die Achse der Durchgangsöffnung parallel verläuft.

7. Anschlusskasten (100) nach Anspruch 7, wobei der parallele Abschnitt (71) durch einen länglichen Schlitz (72) definiert ist.

8. Anschlusskasten (100) nach Anspruch 8, wobei das Verriegelungselement (61) einen Verschraubungsabschnitt (62), der mit einer Gewindeöffnung versehen ist, und einen Verriegelungsabschnitt (63) umfasst, wobei der Verschraubungsabschnitt und der Verriegelungsabschnitt eine größere Ausdehnung als der längliche Schlitz (72) aufweisen und durch eine Verengung (64) getrennt sind, die zum Verschieben in den länglichen Schlitz (72) ausgelegt ist, wenn das Verriegelungselement auf den Gewindestift geschraubt wird.

9. Anschlusskasten (100) nach einem der vorhergehenden Ansprüche, wobei der querverlaufende Abschnitt (70) mit dem Abschnitt parallel zur Achse der Durchgangsöffnung (12) einen Winkel größer als 90° bildet.

## Revendications

1. Boîtier de raccordement (100) comprenant une structure de base (10) qui définit un volume de logement (101) pour des câbles électriques et d'autres composants, ladite structure de base comprenant une paroi arrière (1), des parois périmétriques (2) et un bord périmétrique (4) raccordé auxdites parois périmétriques (2), et comprenant en outre un trou débouchant (12) défini sur le bord périmétrique (4), un support de contact (6), une broche filetée (60) logée dans le trou débouchant (12), un élément de verrouillage allongé (61) qui peut être vissé sur la broche filetée (60), et la paroi périmétrique (2) comprenant une surface de guidage (7) conçue de sorte que, alors que l'élément de verrouillage allongé (61) est vissé sur la broche filetée (60), l'élément de verrouillage allongé (61) coulisse de part et d'autre de la surface de guidage (7), se déplaçant d'une position à proximité de la paroi périmétrique (2) jusqu'à une position faisant saillie vers l'extérieur de la paroi périmétrique (2), la broche filetée (60) reliant le support de contact (6) et l'élément de verrouillage (61) sur les bords opposés du trou débouchant (12),
**caractérisé en ce qu'**il comprend des brides de fixation amovibles (5) qui font saillie, sur le périmètre, des parois périmétriques (2) vers l'extérieur de la structure de base (10), et **en ce que** ledit support de contact (6) est également amovible et est conçu de sorte qu'il peut s'appuyer contre les coins du bord périmétrique (4) de sorte qu'une extension associée fait saillie vers l'extérieur, à partir du bord périmétrique (4).

2. Boîtier de raccordement (100) selon la revendication 1, dans lequel lesdites brides (5) comprennent chacune des régions intentionnellement cassables, formées dans la région se raccordant au bord périmétrique (4).

3. Boîtier de raccordement (100) selon l'une ou l'autre des revendications précédentes, dans lequel ladite broche filetée (60) a une rainure sur l'une de ses extrémités pour loger un élément résilient.

4. Boîtier de raccordement (100) selon l'une quelconque des revendications précédentes, dans lequel lesdites parois latérales (2) et/ou ledit bord périmétrique (4) sont rectangulaires et comprennent chacun un trou débouchant (12) respectif, un support de contact (6), une broche filetée (60), un élément de verrouillage allongé (61) et une surface de guidage (7) à chaque coin, défini par ladite forme rectangulaire.

5. Boîtier de raccordement (100) selon l'une quelconque des revendications précédentes, dans lequel ladite extension dudit support de contact (6) qui fait saillie vers l'extérieur du bord périmétrique (4), est formée comme un secteur circulaire.

6. Boîtier de raccordement (100) selon l'une quelconque des revendications précédentes, dans lequel la surface de guidage (7) comprend une partie (70) qui est transversale par rapport à l'axe du trou débouchant et une partie (71) qui est parallèle par rapport à l'axe du trou débouchant.

7. Boîtier de raccordement (100) selon la revendication 7, dans lequel la partie parallèle (71) est définie par une fente allongée (72).

8. Boîtier de raccordement (100) selon la revendication 8, dans lequel l'élément de verrouillage (61) comprend une partie de vissage (62), prévue avec un trou fileté, et une partie de verrouillage (63), la partie de vissage et la partie de verrouillage ayant une étendue supérieure à la fente allongée (72) et étant séparées par un rétrécissement (64) conçu pour coulisser à l'intérieur de ladite fente allongée (72) lorsque l'élément de verrouillage est vissé sur ladite broche filetée.

9. Boîtier de raccordement (100) selon l'une quelconque des revendications précédentes, dans lequel la partie transversale (70) forme un angle supérieur à 90° avec la partie parallèle à l'axe du trou débouchant (12).
